# FASCICULE DE BREVET EUROPEEN

(11) **EP 2 260 560 B1**
(45) Date de publication et mention de la délivrance du brevet: **26.08.2015**
(21) Numéro de dépôt: 09730465.3
(22) Date de dépôt: 09.04.2009
(51) Int. Cl.: H02J 7/34, H02J 1/10, H02J 4/00

(54) **PROCEDE DE GESTION D'UN RESEAU ELECTRIQUE**
VERFAHREN ZUR VERWALTUNG EINES ELEKTRISCHEN NETZWERKS
METHOD FOR MANAGING ELECTRICAL NETWORK

(30) Priorité: 09.04.2008 FR 0801952
(43) Date de publication de la demande: 15.12.2010
(73) Titulaire: THALES, 92200 Neuilly-sur-Seine (FR)
(72) Inventeur: TARDY, Alain, F-75013 Paris (FR)
(74) Mandataire: Collet, Alain
(86) Numéro de dépôt international: PCT/EP2009/054332
(87) Numéro de publication internationale: WO 2009/125007

(56) Documents cités:
- WO-A-2007/113312
- FR-A- 2 899 734
- US-B1- 6 441 581

## Description

L'invention concerne un procédé de gestion d'un réseau électrique. L'invention trouve une utilité particulière en aéronautique pour les avions commerciaux gros porteurs qui comportent de plus en plus d'équipements électriques embarqués. Ces équipements sont de nature très variée et leur consommation énergétique est très variable dans le temps. A titre d'exemple, les systèmes de climatisation et d'éclairage internes sont en fonctionnement quasi continu alors des systèmes de sécurité redondants comme des commandes de gouverne, ne sont utilisés qu'exceptionnellement.

Généralement, l'avion dispose d'un bus de fourniture d'énergie électrique triphasé permettant l'alimentation de l'ensemble des équipements électriques appelés charges par la suite. Récemment suite à l'apparition de charges de puissance élevées (moteurs électrique ou sous réseaux alternatifs) nécessitant d'être alimentées par des onduleurs de tension triphasés, on a installé à bord d'avions des bus continus haute tension alimentés à partir du bus alternatif au travers de redresseurs. Ces bus continus haute tension sont bien connus dans la littérature anglo-saxonne sous le nom de HVDC pour : « High Voltage Direct Current ». Par la suite, le bus continu haute tension sera appelé bus HVDC.

Les différentes charges peuvent nécessiter des apports énergétiques différents en tension et en nature de courant, alternatif ou continu. Dans la demande de brevet français, n° FR 2 899 734 déposé au nom de la demanderesse, on a proposé une mutualisation de convertisseurs pouvant alimenter différentes charges en fonction de leur besoin instantané en énergie électrique à partir d'un bus de fourniture d'énergie.

Plusieurs problèmes ne sont actuellement pas résolus. Avec l'augmentation du nombre de charges électriques, certaines peuvent parfois régénérer de l'énergie électrique. Actuellement, la régénération est prise en compte localement au niveau de la charge considérée en prévoyant des moyens locaux de dissipation de l'énergie produite par la charge comme par exemple des résistances permettant la dissipation de l'énergie régénérée par effet Joule. Parmi les charges régénératives embarquées à bord d'un aéronef, on trouve par exemple des commandes de vol pilotées électriquement. Lorsqu'on cherche à freiner une gouverne, la commande de vol associée régénère de l'énergie électrique.

En effet, une charge renvoyant de l'énergie vers un bus peut entrainer une instabilité du bus.

L'invention vise à pallier ce problème en proposant un procédé particulier de gestion d'un réseau comprenant de convertisseurs mutualisés.

Un but de l'invention est d'éviter la dissipation sans réutilisation de l'énergie régénérée par certaines charges.

Un autre but de l'invention est de minimiser les reconfigurations de l'association entre convertisseurs et charges.

Un avion dispose également de batteries permettant d'alimenter certaines charges lorsque des générateurs électriques embarqués ou extérieurs ne sont pas disponibles. En particulier, les batteries doivent secourir certains calculateurs ou certains systèmes électriques critiques comme par exemple les commandes de vol, le freinage, l'inversion de poussée des moteurs ou le démarrage de turbines au travers d'un bus continu basse tension. L'invention permet également de relier ces batteries aux convertisseurs mutualisés.

A cet effet, l'invention a pour objet un procédé de gestion d'un réseau électrique comprenant
- un bus d'alimentation électrique,
- plusieurs charges susceptibles soit de fournir soit de consommer de l'énergie électrique du bus,
- une pluralité de convertisseurs réversibles permettant d'échanger de l'énergie entre le bus et les différentes charges
- des moyens d'aiguillage permettant de faire varier une association entre les convertisseurs et les charges,
le procédé étant caractérisé en ce que si une charge régénère de l'énergie, on dissipe cette énergie dans d'autres charges.

Le document US 6 441 581 (King Robert Dean [US] et AL) du 27 août 2002 décrit un système de gestion de l'énergie électrique ainsi que la méthode associée.

L'invention sera mieux comprise et d'autres avantages apparaîtront à la lecture de la description détaillée d'un mode de réalisation donné à titre d'exemple, description illustrée par le dessin joint dans lequel :

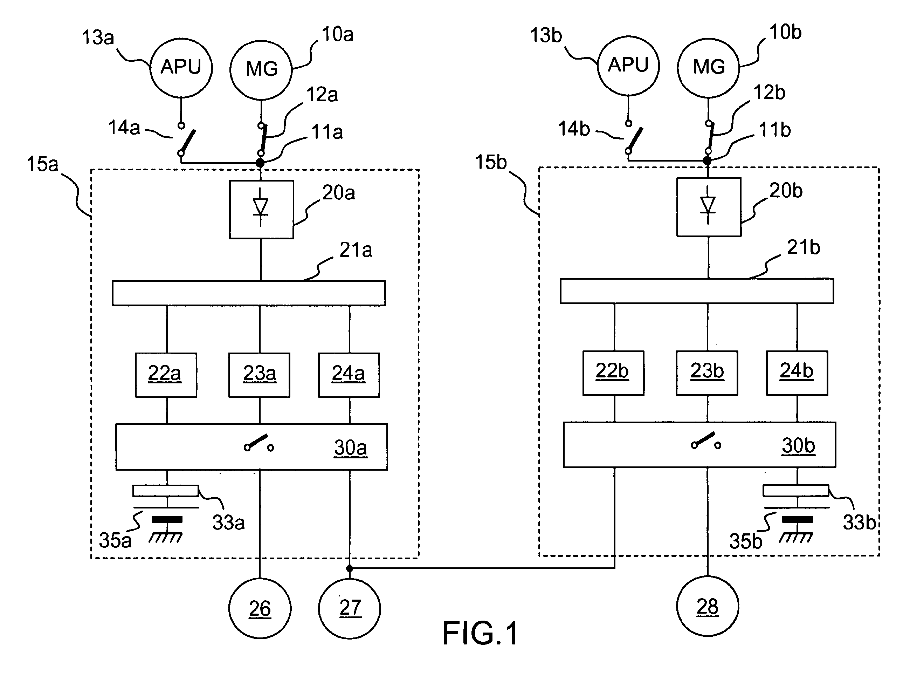

La figure 1 représente un exemple de réseau électrique mettant en oeuvre l'invention.

L'invention est décrite en rapport à un réseau électrique mis en oeuvre dans un aéronef. Il est bien entendu possible de mettre en oeuvre l'invention dans d'autres domaines, particulièrement des domaines utilisant des réseaux électriques embarqués. L'invention est définie par les caractéristiques des revendications independantes. Les modes de réalisation préférés sont définis par les revendications dépendantes.

La figure 1 représente schématiquement différents équipements électriques embarqués à bord d'un aéronef notamment un avion commercial gros porteur. Cet avion dispose de deux générateurs principaux 10a et 10b notés MG. Chaque générateur est entraîné par un des moteurs de l'avion. Les générateurs 10a et 10b fonctionnent lorsque les moteurs de l'avion fonctionnent et délivrent par exemple une tension de 115 V à une fréquence de 400 Hz vers des bus alternatifs, respectivement 11 a et 11 b de l'avion. Des moyens de déconnexion 12a et 12b permettant d'ouvrir la liaison reliant chaque générateur 10a et 10b au bus associé 11 a et 11 b. Associé à chaque générateur principal, un générateur auxiliaire 13a et 13b, noté APU, est entraîné par une turbine dédiée à chaque générateur 13a et 13b pour fournir au bus alternatif correspondant 11a et 11 b la tension de 115 V. De même, des moyens de déconnexion 14a et 14b permettent d'ouvrir la liaison reliant le générateur auxiliaire 13a ou 13b au bus 11a ou 11 b correspondant. La turbine fonctionne en utilisant le carburant de l'avion et est mise en oeuvre lorsque l'avion est au sol.

A bord de l'avion, est également installé, associé à chaque bus 11 a et 11 b, une armoire de puissance 15a et 15b. Ce type d'armoire est bien connu dans la littérature anglo-saxonne sous le nom de « Power Center ». Les deux armoires 15a et 15b sont semblables et pour simplifier la suite de la description une seule sera décrite. L'armoire 15a comprend un redresseur 20a connecté au réseau alternatif 11a et permettant de délivrer une tension continue à un bus d'alimentation électrique continu haute tension 21 a noté HVDC selon une abréviation anglo-saxonne pour : « High Voltage Direct Curent ». Une tension couramment utilisée pour le bus continu haute tension 21 a est de 540V.

Le bus continu 21 a alimente plusieurs convertisseurs d'énergie 22a à 24a destiné chacun à alimenter une charge, par exemple 26 et 27 par l'intermédiaire de moyens d'aiguillage 30a. La représentation de la figure 1 est schématique. Dans la pratique, une charge peut être alimentée par plusieurs convertisseurs ou encore un convertisseur peut alimenter plusieurs charges. Certaines charges peuvent être alimentées en tension continue et le convertisseur associé converti alors la tension du bus continu 21 a en une tension utilisable par la charge considérée. Dans un avion gros porteur, on trouve de nombreuses charges utilisant une tension alternative de 115 V sous une fréquence de 400 Hz. Pour alimenter ces charges, les convertisseurs 22a à 24a sont des onduleurs. Des onduleurs connus ont la particularité d'être réversibles.

Chaque convertisseur 22a à 24a peut être affecté en temps réel aux différentes charges 26 et 27 en fonction du besoin instantané de chaque charge et en fonction de la disponibilité de chacun des convertisseurs 22a à 24a. Les moyens d'aiguillage 30a permettent de faire varier en temps réel l'association entre convertisseurs 22a à 24a et charges 26 et 27. L'association des convertisseurs 22a à 24a et des charges 26 et 27 se fait en fonction du besoin en courant instantané et du mode de contrôle instantané de la charge qui lui est associée. Le mode de contrôle de la charge dépend essentiellement du type de charge. A titre d'exemple couramment mis en oeuvre dans un avion, on peut citer la régulation de vitesse, de couple ou de position, l'antigivrage ou le dégivrage, le fonctionnement à puissance constante et des stratégies diverses de contrôle moteur (défluxage, contrôle avec ou sans capteur).

Les moyens d'aiguillage 30a comportent par exemple des interrupteurs commandés électriquement permettant d'associer chaque convertisseur à toutes les charges qui lui sont compatibles. On entend par compatible le fait que plusieurs charges peuvent fonctionner à l'aide du même convertisseur, notamment lorsqu'elles nécessitent la même alimentation, par exemple une tension de 115 V à une fréquence de 400 Hz. Les convertisseurs permettant de délivrer une même alimentation forment un groupe dont les membres sont interchangeables. Les différents membres d'un groupe sont avantageusement identiques. Cela réduit les coûts de réalisation des convertisseurs en standardisant leur production et permet de simplifier la maintenance de l'avion en ne maintenant en stock qu'un seul type de convertisseur. Comme on le verra par la suite, certains types de convertisseurs peuvent délivrer plusieurs alimentations différentes en fonction du mode de pilotage du convertisseur. Ainsi, à un même groupe de convertisseurs, on peut par exemple associer des charges fonctionnant en tension alternative, par exemple 115V 400Hz, et des charges fonctionnant en tension continu comme par exemple des batteries.

Le groupe est reconfigurable en fonction du besoin instantané des charges pouvant être alimenté par ce groupe. Il n'est pas nécessaire de disposer d'un convertisseur dédié à chaque charge. En effet, les charges ne fonctionnent pas toutes simultanément. Le nombre de convertisseurs d'un même groupe est défini en fonction de la puissance maximale instantanée que l'ensemble des charges associées à un groupe peut consommer. Cette puissance est inférieure à l'addition des puissances maximales de chaque charge. Les moyens d'aiguillage 30a permettent donc de réduire le nombre de convertisseurs embarqués et donc la masse de ces convertisseurs.

De plus, la reconfiguration permet d'améliorer la disponibilité des charges. En effet, en cas de panne d'un convertisseur, un autre convertisseur du même groupe peut immédiatement prendre le relais pour alimenter une charge donnée. Certaines charges critiques, telles que par exemple des commandes de gouvernes, peuvent ainsi fonctionner avec une alimentation sécurisée sans pour cela nécessiter la redondance d'un convertisseur uniquement dédié à ces commandes. L'ensemble des convertisseurs d'un même groupe forme alors une ressource commune capable d'alimenter un groupe de charges. A l'intérieur d'une même ressource commune, les différents convertisseurs qui la composent sont indifférenciés.

Une charge particulière du réseau est constituée par un élément de stockage d'énergie tel que par exemple une batterie, un condensateur, ou une super capacité 35a raccordée à un des convertisseurs par l'intermédiaire des moyens d'aiguillage 30a. De façon classique sur avion, il connu d'utiliser une batterie de tension nominale 28V continu. D'autre tensions de batteries sont bien entendues possibles pour la mise en oeuvre de l'invention. A partir d'un bus 21 a, 540V continu, on peut piloter le convertisseur 22a de façon à ce qu'il délivre directement la tension continue de 28V à un second bus continu 33a pouvant alimenter l'élément de stockage d'énergie 35a. Il est possible d'intercaler entre le second bus 33a et l'élément de stockage d'énergie 35a un chargeur de batterie permettant de réguler le courant chargeant la batterie. Il est également avantageux d'intercaler, pour charger l'élément de stockage d'énergie 35a, entre le convertisseur 22a et l'élément de stockage d'énergie 35a, une unité de transformation et de redressement.

Cette unité est bien connue dans la littérature anglo-saxonne sous le nom de « Transformer Rectifier Unit » et sera appelée par la suite : TRU. Le TRU est alimenté par le bus alternatif de l'avion et fournit une tension continue de 28V. Le TRU comprend généralement un transformateur fonctionnant à la fréquence du réseau alternatif de l'avion, par exemple entre 300HZ et 1200Hz. Le TRU est alimenté en tension alternative 115V 400Hz et fournit une tension continue de 28V. L'utilisation d'un TRU facilite le fonctionnement du convertisseur 22a utilisé en onduleur qui reçoit une tension continue de 540V. On peut considérer l'ensemble formé par le TRU et l'élément de stockage d'énergie 35a comme une charge que l'on peut associer à un des convertisseurs par les moyens d'aiguillage 30a.

On suppose que la charge 27 est susceptible soit de consommer de l'énergie soit de générer de l'énergie électrique. Selon l'invention, lorsque la charge 27, régénère de l'énergie, cette énergie est renvoyée par le convertisseur associé à la charge 27 vers le bus 21 a. Le convertisseur étant bidirectionnel, il n'y a pas à modifier l'association réalisée par les moyens d'aiguillage 30a entre la période où la charge 27 consomme et la période où la charge 27 dissipe de l'énergie.

Dans l'exemple représenté, la charge 27 dissipe l'énergie qu'elle régénère vers la charge 26. Globalement le bus 21 a est consommateur d'énergie. Autrement dit, les charges consommatrices d'énergie reliées au bus 21 a sont capables de consommer toute l'énergie que le bus 21 a reçoit, notamment, par le redresseur 20a et par la charge régénérative 27.

Avantageusement, si l'énergie régénérée ne peut être dissipé dans les autres charges, en l'occurrence la charge 26, on charge la batterie 35. Ici encore, il n'y a pas à modifier l'association réalisée par les moyens d'aiguillage 30a.

Avantageusement, si pour un premier des centres de puissance, l'occurrence le cantre 15a, la puissance régénérée ne peut être dissipé dans les autres charges associées au centre 15a, la charge régénérative 27 dissipe sa puissance vers le bus 21 b du second centre de puissance 15b. A cet effet, la charge 27 est raccordée à la fois, aux moyens d'aiguillage 30a et 30b pour pouvoir dissiper la puissance régénérée soit vers le bus 21 a, au travers d'un des convertisseurs 22a, 23a ou 24a, soit vers le bus 21 b au travers d'un des convertisseurs 22b, 23b ou 24b.

Si l'énergie régénérée ne peut être dissipée dans les autres charges, on charge un des éléments de stockage d'énergie (35a, 35b) de l'un des centres de puissance.

## Revendications

1. Procédé de gestion d'un réseau électrique embarqué, **caractérisé en ce que** le réseau comprend deux centres de puissance (15a, 15b) permettant d'alimenter chacun plusieurs charges (26, 27, 28), chaque centre de puissance (15a, 15b) comprenant :
• un bus d'alimentation électrique (21a, 21b),
• une pluralité de convertisseurs (22, 23, 24) réversibles permettant d'échanger de l'énergie entre le bus (21a, 21b) et les différentes charges (26, 27, 28),
• des moyens d'aiguillage (30) permettant de faire varier une association entre les convertisseurs (22, 23, 24) et les charges (26, 27, 28),
• un élément de stockage d'énergie (35a, 35b),
**caractérisé en ce que** si pour un premier des centres de puissance (15a), la puissance régénérée ne peut être dissipé dans les autres charges (26, 35a) associé au premier centre (15a), la charge régénérative (27) dissipe sa puissance vers le bus (21 b) du second centre de puissance (15b).

2. Procédé selon, la revendication 1, **caractérisé en ce que** si l'énergie régénérée ne peut être dissipé dans les autres charges, on charge un des éléments de stockage d'énergie (35a, 35b).

3. Procédé selon, l'une des revendications précédentes, **caractérisé en ce que** le réseau équipe un aéronef.

## Patentansprüche

1. Verfahren zur Verwaltung eines elektrischen On-Board-Netzwerks, **dadurch gekennzeichnet, dass** das Netzwerk zwei Leistungszentren (15a, 15b) umfasst, die jeweils die Versorgung mehrerer Einheiten (26, 27, 28) erlauben, wobei jedes Leistungszentrum (15a, 15b) umfasst:
• einen elektrischen Versorgungsbus (21a, 21 b),
• eine Vielzahl reversibler Konverter (22, 23, 24), die den Energieaustausch zwischen dem Bus (21a, 21 b) und den verschiedenen Einheiten (26, 27, 28) erlauben,
• Weichenmittel (30), die die Variation einer Kombination zwischen den Konvertern (22, 23, 24) und den Einheiten (26, 27, 28) erlauben,
• ein Energiespeichermittel (35a, 35b),
**dadurch gekennzeichnet, dass**, wenn für ein erstes der Leistungszentren (15a) die regenerierte Leistung nicht in die anderen, mit dem ersten Zentrum (15a) verbundenen Einheiten (26, 35a) abführbar ist, die regenerative Einheit (27) ihre Leistung an den Bus (21b) des zweiten Leistungszentrums (15b) abführt.

2. Verfahren nach Anspruch 1, **dadurch gekennzeichnet, dass**, wenn die regenerierte Energie nicht in die anderen Einheiten abführbar ist, eines der Energiespeichermittel (35a, 35b) geladen wird.

3. Verfahren nach einem der vorangehenden Ansprüche, **dadurch gekennzeichnet, dass** das Netzwerk ein Luftfahrzeug ausstattet.

## Claims

1. A method for managing an on-board electrical network, **characterised in that** the network comprises two power centres (15a, 15b) making it possible for each one to supply several loads (26, 27, 28), each power centre (15a, 15b) comprising:
• an electrical power supply bus (21a, 21b),
• a plurality of reversible converters (22, 23, 24) making it possible to exchange energy between the bus (21a, 21b) and the various loads (26, 27, 28),
• routing means (30) making it possible to vary an association between the converters (22, 23, 24) and the loads (26, 27, 28),
• an energy storage element (35a, 35b),
**characterised in that** if for a first of the power centres (15a) the regenerated power can not be dissipated in the other loads (26, 35a) associated with the first centre (15a), the regenerative load (27) dissipates its power towards the bus (21b) of the second power centre (15b).

2. The method according to Claim 1, **characterised in that** if the regenerated energy can not be dissipated in the other loads, one of the energy storage elements (35a, 35b) is charged.

3. The method according to any of the preceding claims, **characterised in that** the network is fitted in an aircraft.
